# DEMANDE DE BREVET EUROPEEN

(11) **EP 2 827 008 A1**
(43) Date de publication de la demande: **21.01.2015**
(21) Numéro de dépôt: 14175948.0
(22) Date de dépôt: 07.07.2014
(51) Int. Cl.: F16B 31/04, B25B 29/02

(54) **Dispositif de serrage d'écrou**

(30) Priorité: 08.07.2013 FR 1356705
(71) Demandeur: Beck Tight, 59280 Armentieres (FR)
(72) Inventeur: Faure, Vincent, 59280 Armentieres (FR); Dumont, Marcel, 59280 Armentieres (FR)
(74) Mandataire: Cabinet Plasseraud

(57) **Abrégé**

Dispositif de serrage comprenant :
- un écrou, dit écrou de serrage (1), destiné à être vissé sur une tige filetée (5), ledit écrou de serrage (1) comprenant un taraudage destiné à coopérer avec le filetage de la tige filetée (5) ;
- un vérin (7) apte à allonger la tige filetée (5) pour écarter l'écrou de serrage (1) d'une surface d'appui (6) ;
- des moyens de solidarisation (8) du corps (70) du vérin (7) à l'écrou de serrage (1),
- des tiges de poussée (2) traversant des alésages (12) du corps de l'écrou de serrage (1), mobile par rapport au corps selon l'axe de la tige filetée (5), l'une des extrémités de chacune des tiges de poussée (2) étant destinée à être en contact avec la surface d'appui (6), et l'autre extrémité étant destinée à engager avec le piston (71) du vérin (7) ;
- des moyens de maintien mécaniques (4) aptes à maintenir une position écartée de l'écrou de serrage (1) par rapport à la surface d'appui (6).

Selon l'invention, le vérin (7) est un vérin annulaire dont le piston (71) présente un évidement de diamètre interne au moins équivalent au diamètre du taraudage de l'écrou de serrage (1) de telle façon à ce que la tige filetée (5) peut passer au travers du piston (71).

## Description

La présente invention concerne le domaine des dispositifs de serrage, et plus particulièrement le serrage d'écrou sur tige filetée.

Il est connu d'utiliser la méthode de pré-tension de la tige filetée par serrage hydraulique. C'est une méthode qui permet d'exercer directement sur la tige filetée un effort de tension déterminé.

Généralement, une mesure de la tension est le plus souvent réalisée par des moyens de contrôle d'élongation de la tige filetée afin d'éviter une déformation de cette dernière. Bien que cette méthode présente l'avantage d'éliminer la contrainte de torsion au niveau de la tige filetée, elle présente également certains inconvénients.

Un tel dispositif de serrage est connu par exemple du document FR 2 841 304 qui décrit un dispositif de serrage comprenant un actionneur de type vérin hydraulique apte à exercer un effort de traction sur une tige filetée pour mettre cette dernière sous tension. Pour ce faire, l'actionneur vient en appui sur une surface d'appui par le biais d'une jupe tubulaire entourant l'extrémité de la tige filetée et qui comprend une ouverture pour l'accostage de l'écrou contre la surface d'appui.

La tige filetée est mise sous tension à l'aide d'un vérin hydraulique annulaire qui exerce sur celle-ci un effort de traction. L'écrou de serrage libéré de toute contrainte est accosté sans effort de serrage et ne transmet aucun couple à la tige filetée sur laquelle il est vissé. Lorsque la pression dans le vérin est relâchée, l'effort hydraulique du vérin est en grande partie transféré sur l'écrou.

Cependant, une telle méthode de serrage nécessite d'une part que la tige filetée soit pourvue d'une sur-longueur en saillie au niveau de l'écrou pour pouvoir mettre le dispositif en place en venant en prise avec la tige filetée, puis pour exercer une traction sur la tige, ce qui n'est pas forcément toujours le cas.

Le vérin hydraulique employé pour cette méthode de serrage présente par ailleurs un diamètre important, largement supérieur à celui de l'écrou à serrer.

Aussi, un tel dispositif est relativement encombrant et ne permet pas d'effectuer un serrage dans les endroits difficilement accessibles et/ou lorsque la tige filetée ne dépasse pas de l'écrou à serrer.

Pour pallier à ces problèmes, des écrous spécifiques sont utilisés, notamment les écrous permettant un serrage par traction.

Un tel type d'écrou est décrit dans le document FR 2 562 182. Le corps de l'écrou est muni d'une série de vis de poussée implantée autour du filetage intérieur. Ces vis qui s'appuient soit directement sur la face de l'organe à serrer, soit sur une rondelle intermédiaire sont vissées au fur et à mesure par plusieurs passes, avec un couple de vissage réduit, et assurent ainsi la mise en tension de la tige filetée.

Cependant, un tel dispositif de serrage présente de nombreux inconvénients. En effet, la méthode de serrage d'un tel écrou ne permet pas de connaitre avec précision la force de serrage appliquée sur la tige filetée, ce qui a pour conséquence que l'opérateur ne sait pas si le serrage effectué est bon ou insuffisant.

Un autre inconvénient est que l'opération est particulièrement longue étant donné que le serrage de chaque vis est en général effectué à la main en plusieurs passes, plus d'une dizaine de passes est nécessaire.

On connait toutefois du document US 2003/0086770, un outillage hydraulique, spécifique, utilisé pour la mise en tension de la tige filetée et le serrage d'écrou, d'encombrement réduit.

Le dispositif comprend un écrou muni d'un filetage interne et d'un filetage externe, le filetage interne coopérant avec la tige filetée, et d'au moins deux alésages axiaux traversant le corps de l'écrou.

Le dispositif comprend également au moins deux tiges de poussée, chaque tige de poussée comportant une première et une seconde extrémité, chaque tige de poussée étant disposée dans un alésage correspondant, chacune des premières extrémités étant destinée à engager une surface d'appui, chacune des deuxièmes extrémités s'étendant axialement au-delà de l'écrou.

Un vérin hydraulique est solidarisé par vissage à l'écrou en partie supérieure de l'écrou, le vérin étant destiné à appliquer une force dirigée axialement sur les tiges de poussée pour éloigner l'écrou de la surface d'appui.

Selon les constations de l'inventeur, un tel dispositif de serrage nécessite de prévoir un inter-espace important entre la face supérieure de l'écrou et la face inférieure du piston du vérin cylindrique, destiné pour recevoir la longueur de tige filetée surabondante, la hauteur de la tige filetée dépassant de l'écrou n'étant pas toujours connue.

Un tel dispositif doit donc utiliser des tiges de poussée relativement longues qui seront soumises à des déformations importantes lorsqu'elles seront compressées, les déformations pouvant impliquer l'impossibilité de retirer les tiges de poussée de l'écrou de serrage.

Un autre inconvénient est que les tiges de poussée prennent appui seulement sur le diamètre extérieur du piston du vérin sous forme de disque dont le centre de poussée se trouve en son centre, ce qui est susceptible de déformer le piston en « parapluie ». Cette déformation du piston, a pour conséquence d'augmenter les frottements au sein de l'alésage du vérin responsables d'imprécision sur l'effort de serrage et la valeur de serrage finale désirée.

Encore un autre inconvénient d'un tel dispositif, selon les constations de l'inventeur, est que la portion de la tige filetée dépassant de l'écrou peut varier. Ainsi dans le cas d'une tige filetée trop longue, cette dernière entre en contact avec le piston et empêche l'utilisation du dispositif : la tige filetée doit alors être préalablement raccourcie afin d'utiliser le dispositif.

L'invention a notamment pour objectif de pallier les différents inconvénients de ces techniques connues.

Plus précisément, un objectif de l'invention est de fournir un dispositif de serrage permettant un serrage fiable et rapide, en particulier dans des endroits difficilement accessibles, ou encore lorsque la tige filetée dépasse ou ne dépasse pas de l'écrou à serrer.

Un autre objectif de l'invention est, au moins dans un mode de réalisation, de proposer un dispositif proposant une précision de serrage satisfaisante.

Un autre objectif de l'invention est, au moins dans un mode de réalisation, de proposer un dispositif de serrage qui permet d'appliquer une force de serrage déterminée.

Encore un autre objectif de l'invention est, au moins dans un mode de réalisation particulier, de fournir un dispositif peu couteux et simple à mettre en oeuvre.

Ces objectifs, ainsi que d'autres qui apparaîtront plus clairement par la suite, sont atteints selon l'invention à l'aide d'un dispositif de serrage comprenant :
- un écrou, dit écrou de serrage, destiné à être vissé sur une tige filetée, ledit écrou de serrage comprenant un taraudage destiné à coopérer avec le filetage de la tige filetée ;
- un vérin apte à allonger la tige filetée pour écarter l'écrou d'une surface d'appui ;
- des moyens de solidarisation du corps du vérin à l'écrou de serrage,
- des tiges de poussée traversant des alésages du corps de l'écrou, mobiles par rapport au corps selon l'axe de la tige filetée, l'une des extrémités de chacune des tiges de poussée étant destinée à être en contact avec la surface d'appui, et l'autre extrémité étant destinée à engager avec le piston du vérin ;
- des moyens de maintien mécaniques aptes à maintenir une position écartée de l'écrou de serrage par rapport à la surface d'appui.
   de telle façon que :
   ledit dispositif peut passer d'une position de repos dans laquelle ledit écrou de serrage est vissé en butée sur la tige filetée, ledit corps du vérin étant solidarisé à l'écrou de serrage, vers une position de mise en tension de la tige filetée dans laquelle ledit piston du vérin exerce un effort sur lesdites tiges de poussée, les tiges de poussée transmettant cet effort sur la surface d'appui, le corps du vérin écartant l'écrou de serrage de cette surface de contact, puis vers une position de maintien mécanique dans laquelle les moyens de maintien mécaniques sont mis en place de telle façon à maintenir en position écartée l'écrou de serrage par rapport à la surface d'appui.

Selon l'invention, le vérin est un vérin annulaire dont le piston présente un évidement de diamètre interne au moins équivalent au diamètre du taraudage de l'écrou de serrage de telle façon à ce que la tige filetée peut passer au travers du piston.

Selon un aspect avantageux de l'invention, le dispositif comprend une rondelle d'appui destinée à être intercalée entre ladite surface d'appui et les extrémités des tiges de poussée.

Selon une approche particulièrement simple, les moyens de solidarisation du corps du vérin à l'écrou de serrage comprennent un filetage à l'extérieur de l'écrou de serrage et un taraudage à l'intérieur du corps du vérin mutuellement engageant.

Avantageusement, ledit vérin est dit premier vérin, ledit dispositif comprenant un deuxième vérin comprenant un corps destiné à être solidarisé à la partie supérieure du corps du premier vérin et un piston destiné à coopérer en poussée avec le piston du premier vérin. Bien entendu, le nombre de vérin en série peut être supérieur à deux si un effort de serrage plus important est désiré, tel que par exemple trois ou plus.

Préférentiellement, les moyens de maintien mécaniques comprennent un écrou de sécurité dont le taraudage est destiné à coopérer avec un filetage disposé sur la partie extérieure de l'écrou de serrage.

Selon une autre alternative de l'invention, les moyens de maintien mécaniques comprennent des cales d'épaisseur aptes à être intercalées entre l'écrou de serrage et la surface d'appui de telle façon à bloquer la position de l'écrou de serrage.

Selon l'invention, les tiges de poussées sont réparties angulairement autour de l'axe de l'écrou de serrage.

De manière avantageuse, le diamètre du vérin est compris entre le diamètre de l'écrou de serrage et le diamètre de l'écrou de serrage plus 5 cm.

De manière avantageuse, le ou les vérins du dispositif sont des vérins hydrauliques.

L'invention concerne également un procédé de serrage d'un écrou sur une tige filetée, saillante d'une surface d'appui, au moyen d'un dispositif conforme à l'invention, comprenant les étapes suivantes :
- on visse l'écrou de serrage en butée sur la tige filetée,
- on solidarise le corps du vérin à l'écrou,
- on met en tension la tige filetée en actionnant ledit piston du vérin qui exerce un effort sur lesdites tiges de poussée, les tiges de poussée transmettant cet effort sur la surface d'appui de telle façon à ce que le corps du vérin écarte l'écrou de la surface d'appui,
- on maintient en tension la tige filetée par le biais des moyens de maintien mécaniques mis en place de telle façon à maintenir en position écartée l'écrou de serrage par rapport à la surface d'appui.

D'autres caractéristiques et avantages de l'invention apparaîtront plus clairement à la lecture de la description suivante d'un mode de réalisation particulier de l'invention, donnée à titre de simple exemple illustratif et non limitatif, et des dessins annexés, parmi lesquels :
- la figure 1 est une vue en coupe d'un écrou selon l'invention vissé en butée sur une tige filetée par l'intermédiaire d'une rondelle d'appui;
- la figure 2 est une vue en coupe du dispositif de serrage selon l'invention en position de repos, ledit corps du vérin étant solidarisé par vissage à l'écrou ;
- la figure 3 est une vue en coupe du dispositif de serrage selon l'invention en position de mise en tension de la tige filetée, l'écrou de serrage étant écarté de la surface d'appui ;
- la figure 4 est une vue en coupe du dispositif de serrage selon l'invention en position de maintien mécanique (l'écrou de sécurité était vissé en butée contre la surface d'appui);
- la figure 5 est une vue en coupe de l'écrou selon l'invention après l'opération de serrage, le vérin retiré de l'écrou de serrage ;
- la figure 6 est une vue en coupe d'un mode de réalisation particulier de l'invention comprenant deux vérins en série.

Comme précédemment évoqué, le principe général de l'invention repose donc sur la mise en oeuvre d'un dispositif de serrage comprenant :
- un écrou, dit écrou de serrage 1, destiné à être vissé sur une tige filetée 5 ;
- un vérin 7 apte à allonger la tige filetée 5 pour écarter l'écrou 1 d'une surface d'appui 6.

L'écrou de serrage 1, notamment de forme circulaire, comprend une face supérieure 10 et inférieure 11, le corps de l'écrou de serrage 1 comprenant plusieurs alésages 12. De préférence ces alésages 12 sont d'axes parallèles à l'axe de l'alésage taraudé 14 destiné à être vissé sur la tige filetée 5. Ces alésages 12 sont disposés angulairement, de préférence régulièrement, autour d'un axe A défini par l'axe de l'alésage taraudé 14 destiné à être vissé sur la tige filetée 5. Cet écrou 1 est destiné à être vissé sur l'extrémité d'une tige filetée 5 jusqu'à ce que la face inférieure 11 soit en butée avec la surface d'appui 6, directement ou par l'intermédiaire d'une rondelle d'appui 3.

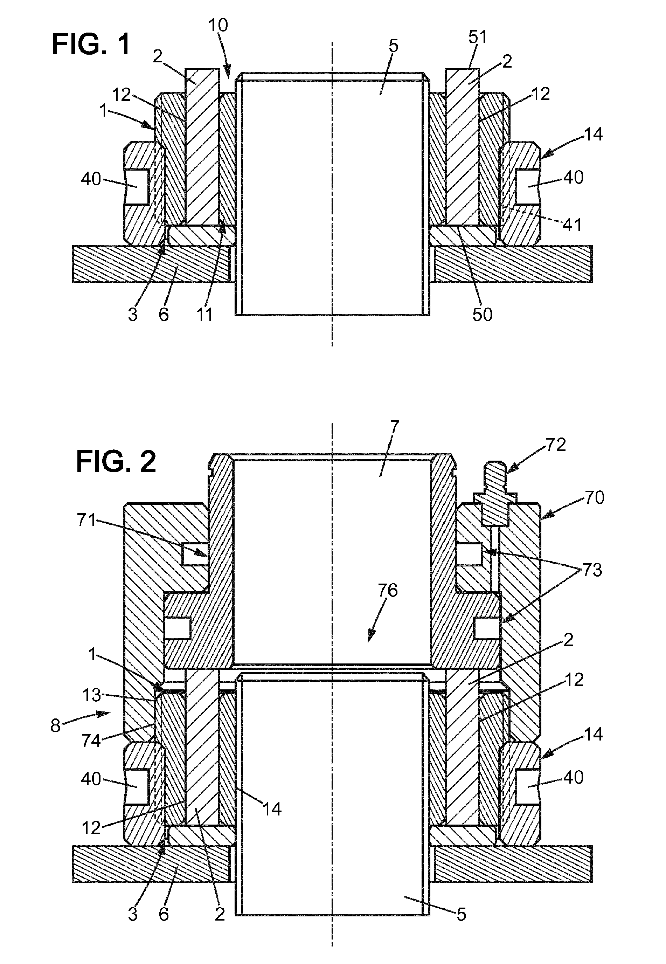

Comme on peut le voir sur la figure 1, les alésages 12 sont destinés à recevoir des tiges, dites tiges de poussée 2. Chacune des tiges de poussée 2 traverse un alésage 12 sur toute sa hauteur, une première extrémité, dite extrémité inférieure 50, de chacune des tiges de poussée 2 étant destinée à être en contact avec la surface d'appui 6, directement ou par l'intermédiaire de la rondelle d'appui 3, l'autre extrémité, dite extrémité supérieure 51 dépassant d'une hauteur prédéterminée vis-à-vis de la face supérieure 10 de l'écrou 1.

Préférentiellement, la hauteur de dépassement des tiges de poussée 2 est définie en fonction de la déformation élastique de la tige filetée 5 une fois cette dernière mise en tension.

Selon le mode de réalisation illustré à la figure 1, chacune des extrémités inférieures 50 est en contact avec ladite rondelle 3 d'appui destinée à être intercalée entre la surface d'appui 6 et les extrémités inférieures 50 des tiges de poussée 2. Avantageusement, la rondelle 3 d'appui est réalisée dans un matériau à dureté élevée de telle façon à éviter une déformation et/ou un poinçonnage de la surface d'appui 6.

Le dispositif de serrage présente également des moyens de maintien mécanique 4 destinés à maintenir la position de l'écrou de serrage 1 une fois que ce dernier est en position écartée par rapport à la surface d'appui 6.

Les moyens de maintien mécaniques 4 peuvent par exemple être constitués par un écrou de sécurité dont le taraudage 41 est destiné à coopérer avec un filetage 13 disposé sur la partie extérieure, et de préférence en partie basse, de l'écrou de serrage 1. Un tel écrou de sécurité peut comprendre des cavités 40 disposées sur sa périphérie, les cavités 40 étant destinées à coopérer avec un outil de serrage tel qu'une clé d'accostage de telle façon à assurer un bon serrage de l'écrou de sécurité. L'axe de vissage de l'écrou de sécurité 14 sur l'écrou de serrage 1 est de préférence coaxial à l'axe de vissage de l'écrou de serrage 1 sur la tige filetée 5.

Selon un autre mode de réalisation particulier de l'invention, non représenté sur les figures, les moyens de maintien mécanique 4 peuvent comprendre des cales d'épaisseur, destinées à être intercalées entre l'écrou de serrage 1 et la surface d'appui 6 de telle façon à bloquer la position de l'écrou de serrage 1.

Selon l'invention, l'écrou de serrage 1 est destiné à être solidarisé à un vérin 7 comprenant un corps 70 et un piston 71, des joints d'étanchéité 73 étant disposés entre le corps 70 et le piston 71 du vérin 7. Le vérin 7 est destiné à fournir la force nécessaire pour pouvoir mettre en tension la tige filetée 5 et réaliser le serrage de l'écrou 1. Le vérin peut, par exemple, être hydraulique afin de pouvoir appliquer une force importante.

Selon l'invention, le vérin 7 du dispositif est un vérin annulaire dont le piston 71 présente un évidement 76 de diamètre interne au moins équivalent au diamètre du taraudage de l'écrou de serrage 1 de telle façon à ce que la tige filetée 5 peut passer au travers du piston 71. Ainsi, un tel vérin 7 annulaire permet de positionner facilement le dispositif sur l'écrou de serrage 1 quelque soit la hauteur de la tige filetée 5 dépassant de l'écrou de serrage 1. Cela a également pour avantage de fournir un dispositif compact, les tiges de poussée 2 étant plus courtes que celles des dispositifs de l'art antérieur.

Avantageusement, l'évidement du piston 71 du vérin 7 peut s'étendre sur toute la hauteur du piston 71 et est d'un diamètre légèrement supérieur au diamètre du taraudage de l'écrou de serrage 1, par exemple supérieur de 2mm par rapport au diamètre du taraudage de l'écrou de serrage 1, de telle façon à ce que la tige filetée 5 passe au travers du piston 71 sans créer de frottements.

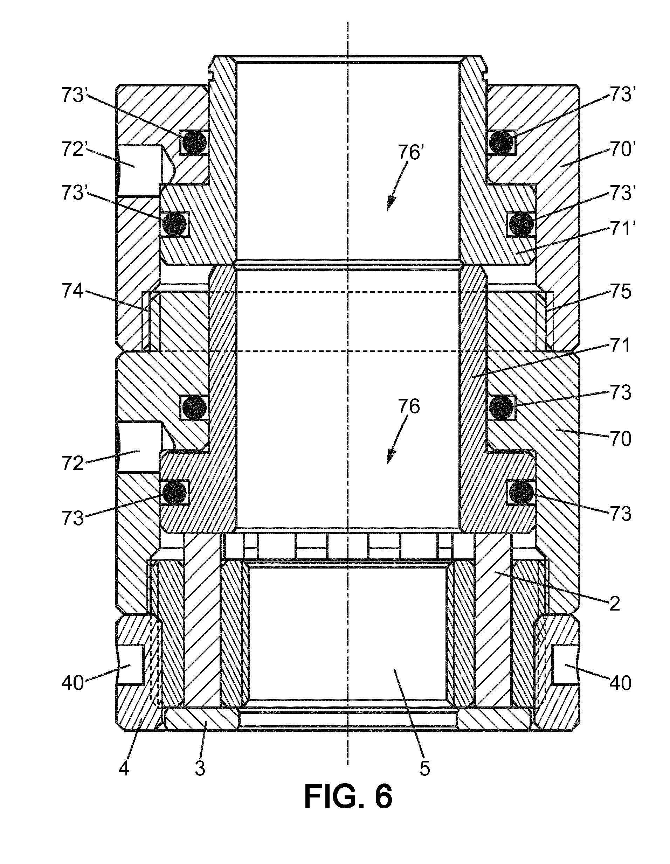

Comme illustré à la figure 6, le vérin 7 comprend une entrée d'huile 72 disposée latéralement sur le corps 70 du vérin. Une alternative possible est de placer l'entrée d'huile 72 en partie supérieure du vérin 7 de telle façon à optimiser l'encombrement du dispositif et faciliter le serrage des écrous difficilement accessible, comme c'est le cas sur les figures 2 à 4.

Selon un mode de réalisation alternatif illustré à la figure 6, le dispositif peut comprendre deux vérins hydrauliques en série, autrement dit un vérin hydraulique à deux étages, de telle façon à doubler la surface pressurisée et ainsi appliquer une force encore plus importante.

Le vérin 7 est alors dit premier vérin, ledit dispositif comprenant un deuxième vérin 7' comprenant un corps 70' destiné à être solidarisé à la partie supérieure du corps 70 du premier vérin 7 et un piston 71' destiné à coopérer en poussée avec le piston 7 du premier vérin.

Le deuxième vérin 7' peut être solidarisé à la partie supérieure du premier vérin 7 par vissage, par exemple au moyen d'un taraudage 74' à l'extrémité inférieure du deuxième vérin 7' et un filetage 75 à l'extrémité supérieure du premier vérin 6. Bien entendu, le nombre de vérin en série peut être supérieur à deux si un effort de serrage plus important est désiré, tel que par exemple trois ou plus.

Selon un mode de réalisation de l'invention, les vérins 7 et 7' sont tous les deux des vérins annulaires de telle façon à ce que la tige filetée 5 peut passer au travers des deux pistons 71 et 71' lors de son élongation.

L'écrou de serrage 1 comprend des moyens de solidarisation 8 au corps 70 du vérin 7. Ces moyens de solidarisation 8 comprennent, par exemple, un filetage 13 à l'extérieur de l'écrou de serrage 1 et un taraudage 74 à l'intérieur du corps 70 du vérin, le filetage 13 et le taraudage 74 étant mutuellement engagés afin de solidariser l'écrou de serrage 1 au corps 70 du vérin 7, le corps 70 du vérin 7 est vissé sur l'écrou de serrage 1 jusqu'à ce que le piston 71 du vérin 7 viennent en butée contre les tiges de poussée 2, un tel assemblage est représenté à la figure 2. De manière préférentielle, le filetage 13 est disposé en partie supérieure de l'écrou de serrage 1.

Une telle disposition permet au vérin 7 de prendre appui sur les tiges de poussée 2 uniquement, et non directement sur la surface d'appui 6 comme c'est le cas dans la plupart des dispositifs utilisés actuellement. Cette disposition a également pour avantage de faciliter le serrage des écrous disposés sur une surface d'appui limitée. Cette disposition permet par ailleurs d'utiliser un vérin de plus petit diamètre en comparaison de ceux employés dans l'état de la technique lors de la mise en oeuvre d'un serrage hydraulique.

La dimension du diamètre du vérin, plus précisément du corps 70 du vérin, peut ainsi être comprise entre la dimension du diamètre de l'écrou de serrage 1 et la dimension du diamètre de l'écrou de serrage plus 5 cm, voire de préférence plus 2 cm, ou encore plus 1 cm.

Une fois le vérin 7 solidarisé à l'écrou de serrage 1, le dispositif est dans une position dite de repos dans laquelle l'écrou de serrage 1 est vissé en butée sur la tige filetée 5 et le piston 71 en butée contre les tiges de poussée 2, et dans laquelle le corps 70 du vérin 7 est solidarisé à l'écrou 1, comme illustré à la figure 2.

Une fois le dispositif en place, ce dernier peut passer vers une position de mise en tension de la tige filetée 5 dans laquelle le piston 71 du vérin 7 exerce un effort sur les tiges de poussée 2, les tiges de poussée 2 transmettant alors l'effort sur la surface d'appui 6 directement ou de préférence par l'intermédiaire de la rondelle d'appui 3.

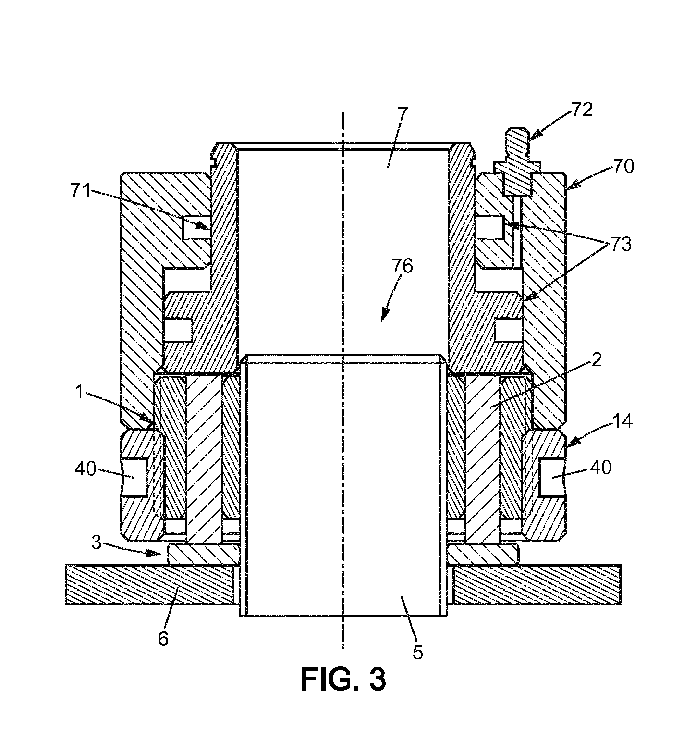

Ce faisant le corps 70 du vérin 7 écarte l'écrou de serrage 1 de la surface d'appui 6 en remontant par rapport au piston 71, tel qu'illustré à la figure 3 et ainsi allonge la tige filetée. On notera que dans cette position, selon l'exemple, la tige filetée 5 pénètre l'évidement 76 du piston du vérin 7.

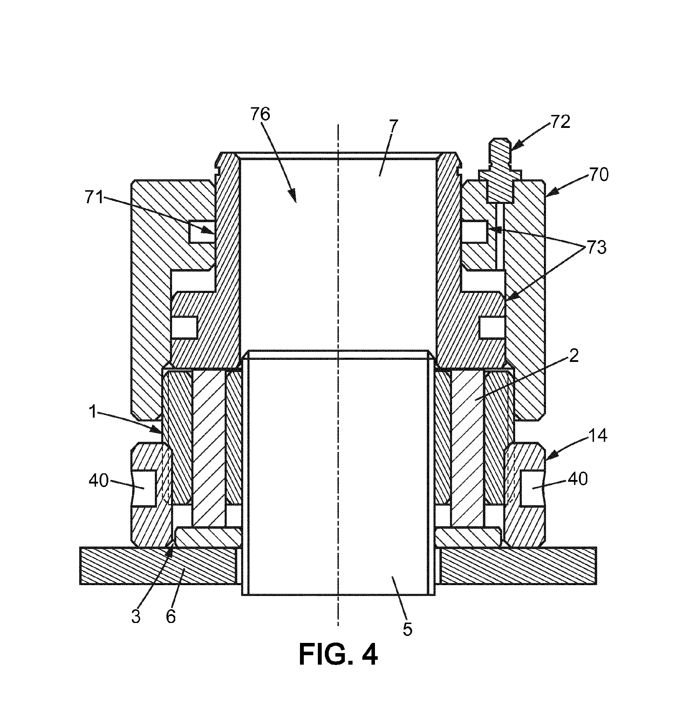

Enfin, le dispositif est passé en position de maintien mécanique dans laquelle les moyens de maintien mécaniques 4 sont mis en place de telle façon à maintenir en position écartée l'écrou de serrage 1 par rapport à la surface d'appui 6. Sur la figure 4, les moyens de maintien mécanique 4, à savoir un écrou de sécurité, sont vissés en butée contre la surface d'appui 6 de telle façon à maintenir la position écartée de l'écrou de serrage 1 par rapport à la surface d'appui 6. Alternativement une cale d'épaisseur déterminée peut être intercalée entre la surface d'appui 6 et l'écrou 1 afin de maintenir l'écartement.

Selon un mode de réalisation particulier de l'invention, le dispositif peut recevoir des moyens pour mesurer l'élongation de la tige filetée, tel qu'un capteur à palpeur, par exemple un comparateur ou capteur inductif, ou encore un dispositif à ultrasons, au cours de la manipulation. Un tel dispositif de mesure de l'élongation de la tige filetée permet d'obtenir une meilleure précision de serrage à la fin de la manipulation.

L'invention concerne également un procédé de serrage d'un écrou 1 sur une tige filetée 5 saillante d'une surface d'appui 6 au moyen d'un dispositif tel que décrit précédemment.

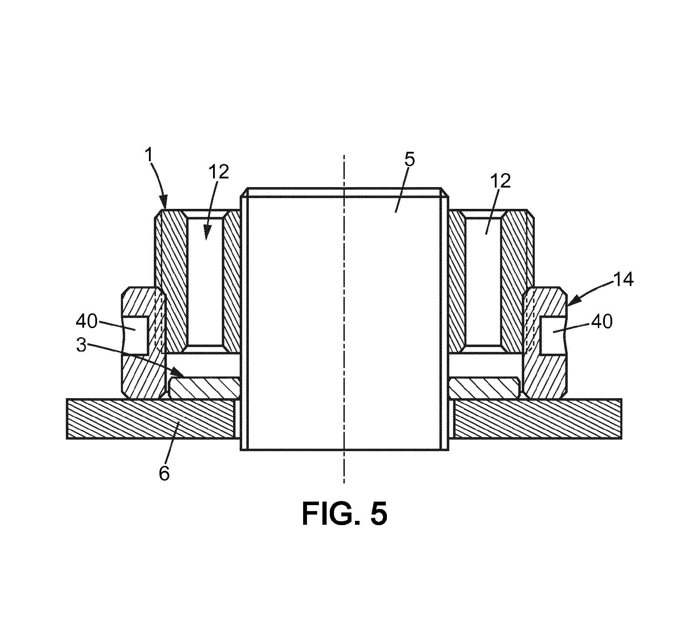

Plus précisément, le procédé de serrage comprend les étapes suivantes :
- on visse dans un premier temps l'écrou de serrage 1 en butée sur la tige filetée 5, de telle façon à ce que la face inférieure 11 de l'écrou de serrage 1 soit en contact avec la surface d'appui 6, directement ou par l'intermédiaire de la rondelle d'appui 3 ;
- on met en place les tiges de poussée 2 dans les alésages 12 de l'écrou de serrage 1 prévus à cet effet, l'extrémité supérieure des tiges de poussée 2 dépassant de l'écrou 1 ;
- on solidarise le corps 70 du vérin 7, par exemple en le vissant sur l'écrou de serrage 1, jusqu'à ce que le piston 71 du vérin 7 soit en butée contre l'extrémité supérieure des tiges de poussée 2 ;
- on met en tension la tige filetée 5 en actionnant le piston 71 du vérin 7 qui exerce un effort sur les tiges de poussée 2, les tiges de poussée 2 transmettant l'effort sur la surface de contact 6 de telle façon à ce que le corps 70 du vérin 7 écarte l'écrou de serrage 1 de la surface de contact 6, notamment jusqu'à ce que le piston 71 entre en butée avec l'écrou de serrage 1 ;
- on maintient en tension la tige filetée 5 par le biais des moyens de maintien mécanique 4, ou par tout autre moyen mécanique, par exemple, des cales d'épaisseur, mis en place de telle façon à maintenir en position écartée l'écrou de serrage 1 par rapport à la surface d'appui 6 ;
- pour finir, on désolidarise le vérin 7 de l'écrou de serrage 1 et on retire les tiges de poussée 2, de telle façon à finaliser le procédé de serrage et obtenir un serrage tel qu'illustré à la figure 5.

Naturellement, d'autres modes de réalisation auraient pu être envisagés par l'homme du métier sans pour autant sortir du cadre de l'invention définie par les revendications ci-après.

### NOMENCLATURE

- 1.: Ecrou de serrage,
- 10.: Face supérieure de l'écrou de serrage,
- 11.: Face inférieure de l'écrou de serrage,
- 12.: Alésages,
- 13.: Filetage extérieur (Ecrou),
- 14.: Alésage taraudé
- 2.: Tiges de poussée,
- 20.: Extrémité inférieure des tiges de poussée,
- 21.: Extrémité supérieure des tiges de poussée,
- 3.: Rondelle d'appui,
- 4.: Moyens de maintien mécaniques,
- 40.: Cavités,
- 41.: Taraudage,
- 5.: Tige filetée,
- 6.: Surface d'appui,
- 7.: Premier vérin,
- 7'.: Deuxième vérin,
- 70.: Corps du premier vérin,
- 70'.: Corps du deuxième vérin
- 71.: Piston du premier vérin,
- 71'.: Piston du deuxième vérin,
- 72.: Entrée huile (premier vérin)
- 72'.: Entrée huile (deuxième vérin),
- 73.: Joints d'étanchéité (premier vérin),
- 73'.: Joints d'étanchéité (deuxième vérin),
- 74: Taraudage (corps premier vérin),
- 74'.: Taraudage (corps deuxième vérin),
- 75.: Filetage (corps premier vérin),
- 76.: Evidement (premier vérin),
- 76'.: Evidement (deuxième vérin),
- 8.: Moyens de solidarisation du vérin à l'écrou de serrage,
- A.: Axe vertical de la tige filetée

## Revendications

1. Dispositif de serrage comprenant :
- un écrou, dit écrou de serrage (1), destiné à être vissé sur une tige filetée (5), ledit écrou de serrage (1) comprenant un taraudage destiné à coopérer avec le filetage de la tige filetée (5) ;
- un vérin (7) apte à allonger la tige filetée (5) pour écarter l'écrou de serrage (1) d'une surface d'appui (6) ;
- des moyens de solidarisation (8) du corps (70) du vérin (7) à l'écrou de serrage (1),
- des tiges de poussée (2) traversant des alésages (12) du corps de l'écrou de serrage (1), mobile par rapport au corps selon l'axe de la tige filetée (5), l'une des extrémités de chacune des tiges de poussée (2) étant destinée à être en contact avec la surface d'appui (6), et l'autre extrémité étant destinée à engager avec le piston (71) du vérin (7) ;
- des moyens de maintien mécaniques (4) aptes à maintenir une position écartée de l'écrou de serrage (1) par rapport à la surface d'appui (6) ;
de telle façon que :
ledit dispositif peut passer d'une position de repos dans laquelle ledit écrou de serrage (1) est vissé en butée sur la tige filetée (5), ledit corps (70) du vérin (7) étant solidarisé à l'écrou de serrage (1), vers une position de mise en tension de la tige filetée (5) dans laquelle ledit piston (71) du vérin (7) exerce un effort sur lesdites tiges de poussée (2), les tiges de poussée (2) transmettant cet effort sur la surface d'appui (6), le corps (70) du vérin (7) écartant l'écrou de serrage (1) de cette surface d'appui (6), puis vers une position de maintien mécanique dans laquelle les moyens de maintien mécanique (4) sont mis en place de telle façon à maintenir en position écartée l'écrou de serrage (1) par rapport à la surface d'appui (6) ;
**caractérisé en ce que** le vérin (7) est un vérin annulaire dont le piston (71) présente un évidement de diamètre interne au moins équivalent au diamètre du taraudage de l'écrou de serrage (1) de telle façon à ce que la tige filetée (5) peut passer au travers du piston (71).

2. Dispositif de serrage selon la revendication 1, comprenant une rondelle d'appui (3) destinée à être intercalée entre ladite surface d'appui (6) et les extrémités des tiges de poussée (2).

3. Dispositif de serrage selon la revendication 1, dans lequel les moyens de solidarisation (8) du corps (70) du vérin (7) à l'écrou de serrage (1) comprennent un filetage (13) à l'extérieur de l'écrou de serrage (1) et un taraudage (74) à l'intérieur du corps (70) du vérin (7) mutuellement engageant.

4. Dispositif de serrage selon l'une des revendications 1 à 3, dans lequel ledit vérin (7) est dit premier vérin, ledit dispositif comprenant un deuxième vérin (7') comprenant un corps (70') destiné à être solidarisé à la partie supérieure du corps (70) du premier vérin et un piston (71') destiné à coopérer en poussée avec le piston (71) du premier vérin.

5. Dispositif de serrage selon l'une des revendications 1 à 4, dans lequel les moyens de maintien mécaniques (4) comprennent un écrou de sécurité dont le taraudage (41) est destiné à coopérer avec un filetage (13) disposé sur la partie extérieure de l'écrou de serrage (1).

6. Dispositif de serrage selon l'une des revendications 1 à 5, dans lequel les moyens de maintien mécanique (4) comprennent une ou plusieurs cales d'épaisseur apte à être intercalées entre l'écrou de serrage (1) et la surface d'appui (6) de telle façon à bloquer la position de l'écrou de serrage (1).

7. Dispositif de serrage selon l'une des revendications 1 à 6, dans lequel les tiges de poussées (2) sont réparties angulairement autour à l'axe de l'écrou de serrage (1).

8. Dispositif de serrage selon l'une des revendications 1 à 7, dans lequel le diamètre du vérin (7) est compris entre le diamètre de l'écrou de serrage (1) et le diamètre de l'écrou de serrage (1) plus 5 cm.

9. Dispositif de serrage selon l'une des revendications 1 à 8, dans lequel ledit ou lesdits vérins (7, 7') sont des vérins hydrauliques.

10. Procédé de serrage d'un écrou (1) sur une tige filetée (5) saillante d'une surface d'appui (6) au moyen d'un dispositif selon l'une quelconque des revendications 1 à 9, comprenant les étapes suivantes :
- on visse l'écrou de serrage (1) en butée sur la tige filetée (5),
- on solidarise le corps (70) du vérin (7) à l'écrou de serrage (1),
- on met en tension la tige filetée en actionnant ledit piston du vérin qui exerce un effort sur lesdites tiges de poussée (2), les tiges de poussée (2) transmettant cet effort sur la surface de contact (6) de telle façon à ce que le corps (70) du vérin (7) écarte l'écrou de serrage (1) de la surface de contact (6) ;
- on maintient en tension la tige filetée (5) par le biais des moyens de maintien mécaniques (4) mis en place de telle façon à maintenir en position écartée l'écrou de serrage (1) par rapport à la surface d'appui (6).
